Europäisches Patentamt

European Patent Office

Office européen des brevets

(19)

(11) Veröffentlichungsnummer: **0 000 129**

**A1**

(12) **EUROPÄISCHE PATENTANMELDUNG**

(21) Anmeldenummer: 78100123.5

(22) Anmeldetag: 09.06.78

(51) Int. Cl.²: **C 04 B 33/04,** C 09 C 1/42, C 01 B 33/26, B 28 C 1/08, B 03 B 5/34, B 01 J 21/, B 41 M 5/22, C 01 B 33/3

(30) Priorität: 15.06.77 DE 2727052

(43) Veröffentlichungstag der Anmeldung: 10.01.79 Patentblatt 79/1

(84) Benannte Vertragsstaaten: BE FR GB NL

(71) Anmelder: SÜD-CHEMIE AG,
Lenbachplatz 6,
D-8000 München 2 (DE)

(72) Erfinder: Fahn, Rudolf, Dipl.-Chem.,Dr.,
Figurenweg 5,
D-8051 Gammelsdorf (DE)

(72) Erfinder: Fenderl, Nikolaus,Dipl.-Chem.,Dr.,
Beethovenstrasse 7,
D-8052 Moosburg (DE)

(72) Erfinder: Radlmaier, Georg,
Haus 31,
D-8051 Hörgertshausen (DE)

(74) Vertreter: Reitzner, Bruno, Dr. et al,
Patentanwälte R. Splanemann Dr. B. Reitzner,
J. Richter  F. Werdermann Tal 13

(54) Verfahren zum Reinigen von Tonsuspensionen und Verwendung der erhaltenen Produkte.

(57) Verfahren zum Reinigen von Tonsuspensionen zwecks Gewinnung der Feinanteile, wobei der Rohton, z.B. ein Ton der Montmorillonit-Beidellit- Reihe, wie Bentonit, einer Säurebehandlung unterworfen und die Suspension des säurebehandelten Materials in einem Hydrozyklon von den Grobanteilen befreit wird. Die Tonsuspension hat gewöhnlich einen Feststoffanteil von etwa 150 bis 250 g/Liter, vorzugsweise von etwa 180 bis 200 g/Liter. Das von den Grobanteilen befreite säurebehandelte Material kann wieder mit Alkalioder Erdalkali-Ionen beladen werden. Die erhaltenen Produkte eigen sich als Adsorptions- und Bleichmittel, Füllstoffe, Papierbeschichtungsmittel, Farbentwickler, Katalysatoren und Träger für Katalysatoren, Ionenaustauscher und Komplexbildner.

EP 0 000 129 A1

R. SPLANEMANN ... ... F. WERDERM...
DIPL. ING. ... DIPL.-ING.

MÜNCHEN                                           HAM...

8000 MÜNCHEN 2    9. Juni
Tal 13
Telefon (089) 22 62 07 / 22 62 09
Telegramme: Inventius München

Unsere Akte: 4465-X-10. ...

Ihr Zeichen:    Europ. Pat...
                anmeldung
                Süd-Chemie ...

**BEZEICHNUNG GEÄNDERT**
**siehe Titelseite**

— 1 —

<u>Verfahren zum Reinigen von Tonsuspensionen</u>

Die Erfindung betrifft ein Verfahren zum Reinigen von Tonsuspensionen, insbesondere von Bentonitsuspensionen, zwecks Gewinnung der Feinanteile.

Natürlich vorkommende Tone, wie z.B. Bentonite, enthalten gewöhnlich Begleitminerale, deren Korngröße meist die der Tonteilchen überschreitet und die ferner im allgemeinen härter als die Tonteilchen sind. Bei diesen Grobteilchen handelt es sich beispielsweise um Quarz, Glimmer, Feldspat, Kalkspat, Dolomit, Pyrit, Hämatit usw.

Diese Grobanteile sind wegen ihrer Härte durch Trocken- und Naßvermahlung nur sehr schwer zu zerkleinern. Auch eine Abtrennung durch Trocken- oder Naßsieben führt nur bis herab zu einer bestimmten Korngröße der Grobanteile zum gewünschten Erfolg.

Bei Versuchen, die Abtrennung der Grobanteile von Bentonitsuspensionen in einem Hydrozyklon durchzuführen, hat die Anmelderin festgestellt, daß infolge der innerkristallinen Quellung und Aufteilung des Tonminerals Montmorillonit die Viskosität von höherkonzentrierten Tonsuspensionen so stark zunahm, daß eine Abscheidung der Grobanteile behindert wurde. Hierbei erniedrigten sich die Zentrifugalbeschleunigung und die Sinkgeschwindigkeit der Teilchen, so daß der benötigte Pumpendruck mit steigender Viskosität quadratisch anstieg.

Um diese Schwierigkeiten zu umgehen, war es notwendig, die Tonsuspensionen sehr stark zu verdünnen, wodurch die anschließende Aufarbeitung erschwert und die Wirtschaftlichkeit beeinträchtigt wurde.

Es liegt der Erfindung deshalb die Aufgabe zugrunde, ein Verfahren zu entwickeln, bei dem auch hochviskose Bentonitsuspensionen ohne die vorgenannten Schwierigkeiten von Grobanteilen gereinigt werden können.

Die Lösung dieser Aufgabe wird nach dem kennzeichnenden Teil des Anspruchs 1 darin gesehen, daß man den Rohton einer Säurebehandlung unterwirft und die Suspension des säurebehandelten Materials in einem Hydrozyklon von den Grobanteilen befreit.

Tonminerale, die nach dem Verfahren gemäß der Erfindung gereinigt werden können, umfassen z.B. solche vom Strukturtyp der quellfähigen Smektite, Montmorine und Montmorillonoide und Tonminerale mit Arten-Fehlordnung (Mixed-layer-Silikate). Eine Zusammenfassung dieser Minerale findet sich in "Ullmanns Enzyklopädie der technischen Chemie", Band 17, 1966, Seiten 583 bis 597.

Bei dem Verfahren gemäß der Erfindung geht man vorzugsweise von einer Suspension eines Tons der Montmorillonit-Beidellit-Reihe, vorzugsweise von Bentonit, aus. Bentonite können wechselnde Mengen an Alkali bzw. Erdalkali enthalten. Während die amerikanischen Bentonite vom Wyoming- Typ durch einen hohen Alkaligehalt gekennzeichnet sind, enthalten die europäischen Bentonite mehr austauschfähiges Calcium, weshalb man sie zur Erhöhung ihres Quellvermögens manchmal einer Alkalibehandlung unterzieht. Als erfindungsgemäße Ausgangsmaterialien kommen auch diese alkalisch aktivierten Bentonite in Betracht.

Die Säurebehandlung des Rohtones ist im allgemeinen bekannt und wird zur Herstellung von Bleicherden in großem Umfang angewendet. Für den Aufschluß können praktisch alle Säuren verwendet werden, insbesondere Mineralsäuren, wie Salzsäure, Schwefelsäure, Salpetersäure und Phosphorsäure, oder aber auch organische Säuren, wie Essigsäure. Die Säurebehandlung wird im allgemeinen in verdünnter, wäßriger Suspension durchgeführt. Man kann aber auch einen sogenannten "trockenen Aufschluß" vornehmen, indem man den Ton mit verhältnismäßig konzentrierten Säuren knetet.

Ferner kann der Ton auch mit gasförmigen Säuren, wie Chlorwasserstoff oder Schwefeldioxid, behandelt werden. Üblicherweise erfolgt die Säurebehandlung bei erhöhten Temperaturen.

Bei dem Verfahren gemäß der Erfindung wird die Säurebehandlung vorzugsweise mit einer Mineralsäure, wie Salzsäure oder Schwefelsäure bei erhöhten Temperaturen, vorzugsweise bei etwa 90 bis 100° C oder auch unter Druck durchgeführt.

Die Dauer der Säurebehandlung hängt von der Art und der Konzentration der Säure sowie von der Temperatur ab.

Durch die Säurebehandlung der Bentonitsuspension wird bei einem zusätzlichen Zerkleinerungseffekt der aktiven Substanz die Gelbildung der Tonminerale unterbunden. Die Gangart (Begleitminerale) durchläuft den Prozeß meist ohne Zerkleinerungseffekt. Im allgemeinen führt man die Säurebehandlung so lange durch, bis eine spezifische Oberfläche des Tons nach BET von mindestens 150 $m^2$/g erreicht wird. Der Ausgangston hat eine spezifische Oberfläche von etwa 60 - 80 g/$m^2$. Ferner hat der säurebehandelte Ton im allgemeinen ein Mikroporenvolumen kleiner 800 Å von mindestens 0,13 ml/g und kleiner 140 Å von mindestens 0,10 ml/g. Außerdem sollen mindestens 18 Gew.-% des $Al_2O_3$- und $Fe_2O_3$-Gehalt herausgelöst worden sein, und ferner sollen mindestens 12 Gew.-% hydratisierte Kieselsäure (in Soda löslich) vorliegen.

Die säurebehandelte Tonsuspension kann unmittelbar in den Hydrozyklon eingebracht werden. Vorzugsweise wird der säurebehandelte Ton jedoch vor der Behandlung im Hydrozyklon von überschüssiger Säure und löslichen Salzen befreit. Dies geschieht zweckmäßig durch Fil-

trieren der Tonsuspension und anschließendes Auswaschen. Störende Salze sind insbesondere die Eisensalze, die manchmal beim Auswaschen mit Wasser hydrolysieren. Aus diesem Grunde ist es häufig zweckmäßig, das Auswaschen mit verdünnter Säure vorzunehmen, bis im Waschwasser kein Eisen mehr festgestellt werden kann. Die Reste der Säure können dann mit Wasser ausgewaschen werden. Restmengen an Eisensalzen können aber auch durch Auswaschen mit verdünnten Lösungen von Komplexbildnern entfernt werden. Danach wird das gewaschene Material für die Hydrozyklonbehandlung wieder in Wasser suspendiert.

In den Hydrozyklon wird vorzugsweise eine Suspension mit einem Feststoffgehalt von etwa 150 bis 250 g/Liter, vorzugsweise von 180 bis 200 g/Liter, eingesetzt.

Die Wirkungsweise des Hydrozyklons ist im allgemeinen bekannt. Es wird beispielsweise auf "Ullmanns Enzyklopädie der Technischen Chemie", Band 2, Verfahrenstechnik I, (1972) Seiten 208 und 220 bis 223 verwiesen.

Für die Abtrennung der Grobanteile aus Tonsuspensionen werden Hydrozyklone, die nach dem gewünschten Grenzkorndurchmesser ausgelegt sind, verwendet.

Dieser Grenzkorndurchmesser ist nach der Formel

$$d_K = \sqrt{\frac{18 \cdot \eta}{21 \cdot \pi} \cdot \frac{g \cdot Ve}{h \cdot (\gamma_F - \gamma) \cdot Ui^2}}$$

vor allem von der Umfangsgeschwindigkeit (Ui) der Suspension am Staurohr und der Aufgabemenge (Ve) abhängig. In der Formel bedeuten ferner $\eta$ die Viskosität der Suspension, g die Erdbeschleunigung, h die Höhe des Hydrozyklons und $(\gamma_F - \gamma)$ die Dichtedifferenz zwischen Feststoff und Flüssigkeit

Aus der Formel ergibt sich, daß die Baugröße der Hydrozyklone mit steigendem gefordertem Grenzkorndurchmesser
ansteigt und umgekehrt. Zugleich müssen kleinere Hydrozyklone im allgemeinen mit höheren Pumpendrücken gefahren werden als größere.

Für säurebehandelte Bentonitsuspensionen ist ein
Grenzkorndurchmesser von 15 - 20 µm im allgemeinen
für die meisten Verwendungszwecke ausreichend. Unter
Grenzkorndurchmesser versteht man dabei, daß im feinteiligen Zyklonüberlauf bei 100%iger Trennwirkung
keine Teilchen größer als 15 - 20 µm enthalten sind.
Dies entspricht etwa einem Zyklon mit 40 mm Durchmesser
und einer Einlaufschlitzdüse von etwa 3 x 10 mm.
Der Pumpendruck liegt bei etwa 2 bis 5 atü.

In der Praxis liegt die Trennwirkung aber meist unter
100 %. Versuche haben gezeigt, daß die Trennwirkung
durch zu große Unterlaufmengen stark abnimmt und
daß bei zu hoher Konzentration von Kornanteilen
etwa des 10fachen Grenzkorndurchmessers der Zyklon
im Unterlauf und an der Einlaufdüse manchmal zusetzt.

Das erfindungsgemäße Verfahren wird deshalb im allgemeinen
so durchgeführt, daß die säurebehandelte Bentonitsuspension über mehrere hintereinander geschaltete Zyklonstufen
gepumpt wird, wobei für die erste Stufe die geforderte
Trenngrenze verdoppelt werden kann. Derartige Zyklone
haben einen Innendurchmesser von etwa 80 mm und werden
mit etwa 1,5 bis 3,5 atü Pumpendruck betrieben. Durch
diese erste Reinigungsstufe werden etwa 10 % Grobanteile
abgetrennt. Der Zyklondurchgang hat eine Kornfeinheit
von etwa 95 % kleiner als 32 µm.

In der zweiten Stufe wird ein Zyklonfeingut mit einer Kornfeinheit von bis zu 99 % feiner 25 $\mu$m erhalten, wobei die Ausbeute in dieser Stufe etwa 55 % beträgt, so daß die Gesamtausbeute im allgemeinen zwischen 45 und 55 % liegt.

Die Aufteilung des Verfahrens in zwei Schritte hat auch noch den Vorteil, daß der Zyklondurchlauf (Grobanteile) der zweiten Stufe gegebenenfalls als selbständiges Produkt gewonnen werden kann, zum Beispiel als schnell filtrierende Bleicherde.

Setzt man statt dieses säurebehandelten Tons einen unbehandelten Ton ein, z.B. einen Natriumbentonit vom Typ Wyoming, so muß man, um eine Feinkornfraktion mit vergleichbarer Teilchenfeinheit zu erzielen, eine entsprechend verdünnte Suspension verwenden, d.h. man kommt nur auf eine Feststoffkonzentration von etwa 30 g/Liter.

Die aus dem Hydrozyklon erhaltene Suspension der feinen Teilchen kann in üblicher Weise aufgearbeitet werden, z.B. dadurch, daß die festen Teilchen durch Abfiltrieren oder Abzentrifugieren von der Flüssigkeit abgetrennt werden. Der feuchte Kuchen kann dann bei mäßigen Temperaturen getrocknet werden. Das aus der Suspension des säurebehandelten Bentonits erhaltene Produkt eignet sich sehr gut als Adsorptions- und Bleichmittel für die Raffination von Ölen und Fetten sowie von Lösungsmitteln, als Füllstoff für Papier, Kunststoff, Kautschuk usw., ferner als Papierbeschichtungsmittel sowie zur Herstellung von Katalysatoren und Trägermaterial für Katalysatoren. Besonders geeignet ist das Produkt wegen seiner geringen Korngröße und Homogenität als Farbentwickler für kohlefreies Kopiermaterial. Diese Farbentwickler werden als Beschichtungsmassen auf Papier bzw. Schreibmaschinenbänder aufgebracht. Auf einem anderen Papierblatt befindet sich, in Mikrokapseln eingeschlossen, eine Öllösung eines Leukofarbstoffes. Werden die Mikrokapseln durch den Anschlag der Schreibmaschinentypen oder durch den Druck einer Kugelschreibermine zerstört, so reagiert der freigesetzte Leukofarbstoff mit dem Farbentwickler.

Schließlich kann das von den Grobanteilen befreite säurebehandelte Material wieder mit Alkali- oder Erdalkali-Ionen beladen werden. Man erhält aber hierbei in der Regel nicht mehr das Ausgangsmaterial, da durch die Säurebehandlung auch die dreiwertigen Ionen bzw. ein Teil davon herausgelöst wurde und das Kristallgitter aufgrund dieser Behandlung eine gewisse Veränderung erfahren hat.

Die wieder mit Alkali- oder Erdalkali-Ionen beladenen Produkte sind hinsichtlich ihrer Teilchengröße mit den säurebehandelten Produkten vergleichbar; sie haben aber auch die überraschende Eigenschaft, daß sie als Ionenaustauscher und Komplexbildner wirken. Die Beladung mit Alkali- bzw. Erdalkali-Ionen erfolgt im allgemeinen dadurch, daß die säurebehandelten Produkte in Lösungen von Alkali- bzw. Erdalkalisalzen oder -hydroxiden erwärmt werden. Bei Verwendung von Salzen werden alkalisch reagierende Lösungen von Salzen, wie Natriumcarbonat oder Natriumborat, bevorzugt.

Die Erfindung ist durch die nachstehenden Beispiele in nicht einschränkender Weise erläutert:

## Beispiel 1

Bentonitischer Rohton aus den bayerischen Lagerstätten im Raum Moosburg-Mainburg-Landshut wird mit etwa 1000 mval Salzsäure, bezogen auf 100 g Trockenton versetzt und 8 Stunden auf etwa 95°C erhitzt. Die in Lösung gegangenen Anteile werden zusammen mit der überschüssigen Säure vom Feststoff abgetrennt. Der säurebehandelte Ton wird bis auf einen pH-Wert von etwa 3,5 bis 5 ausgewaschen.

Das noch feuchte Material wird durch Zusatz von Wasser in eine Suspension mit einem Feststoffgehalt von etwa 200 g/Liter übergeführt. Die Suspension wird über zwei Hydrozyklonstufen geleitet und von den Grobanteilen über 25 µm, die üblicherweise aus Quarz, Glimmer, Feldspat, Pyrit und Hämatit bestehen, weitgehend befreit.

Im Vergleich zum säurebehandelten Einsatzmaterial hatten die nach der zweiten Hydrozyklonstufe erhaltenen Feinanteile aus dem Überlauf folgende Eigenschaften:

|  | | Einsatz-material | Fein-anteile |
|---|---|---|---|
| Feststoffgehalt | g/Liter | 186 | 109 |
| Ausbeute | % | 100 | 49,5 |
| Spez.Oberfläche | $m^2/g$ | 221 | 262 |
| Weißgrad(Elrepho) | % | 72,9 | 76,7 |
| Naßsiebung Rückstand größer 25 $\mu$ | % | 21,0 | 0,9 |

Die Trübe mit den feinen Teilchen wird filtriert und der erhaltene Filterkuchen bei mäßigen Temperaturen getrocknet und gemahlen.

Zum Vergleich wurde eine nicht mit Säure behandelte Bentonitsuspension vom Typ Wyoming zur Anreicherung der Feinanteile einer Hydrozyklonbehandlung unterzogen, wobei der Feststoffgehalt der Suspension im Höchstfall 30 g/Liter betrug. Der Prozentgehalt der Feinstanteile im Ausgangsmaterial bzw. im Hydrozyklon-Feingut (Teilchen kleiner als 25 $\mu$) ist nachstehend in Abhängigkeit vom Feststoffgehalt der jeweiligen Suspension angegeben.

| Feststoffgeh. d.Suspension g/Liter | Feinstanteile (Montmorillonit) i.Ausgangsmat.,% | Feinstanteile (Montmorillonit)d.Hydro-zyklon-Feingutes,% |
|---|---|---|
| 30 | 82,5 | 86,0 |
| 20 | 82,5 | 87,5 |
| 10 | 82,5 | 91,0 |

Man erkennt also, daß der Anreicherungseffekt im Hydrozyklon schon bei einem Feststoffgehalt der Suspension von 30 g/Liter deutlich absinkt.

BAD ORIGINAL

Es wurde auch die Viskosität von Suspensionen des bentoniti schen Rohtons und des nach der vorstehenden Arbeitsweise erhaltenen säurebehandelten Tons bestimmt. Für die Messungen wurde ein Rotations-Viskosimeter der Firma Haake, Typ Roto Visco RV 11 mit einem Drehkörper MV I verwendet. Die Messungen wurden mit einem Schergefälle von $D=63(\text{sec}^{-1})$ und $D=570(\text{sec}^{-1})$ durchgeführt. Es wurden die nachstehenden Ergebnisse erhalten:

| Probe Nr.: | 1 | 2 | 3 | 4 | 5 | 6 |
|---|---|---|---|---|---|---|
| Material | Rohton | säurebeh. Ton | Rohton | säureb. Ton | Rohton | säurebeh. Ton |
| Feststoffgeh.% | 31 | 31 | 19 | 19 | 14 | 14 |
| pH-Wert | 7,3 | 3,7 | 7,3 | 3,7 | 7,3 | 3,7 |
| Viskosit.(mPa.s) | | | | | | |
| bei D 63 sec$^{-1}$ | 316 | 51 | 35 | 4 | 12 | 3,1 |
| D 570 sec$^{-1}$ | 88 | 36 | 8 | 4 | 4 | 3,4 |

Man erkennt deutlich den Abfall der Viskosität und die Verminderung des typisch thixotropen Verhaltens von Bentonitsuspensionen nach der Säurebehandlung.

Berücksichtigt man die Tatsache, daß durch die Säurebehandlung etwa 15 % unwirksamer Substanz herausgelöst werden, dann müßte der Effektivität nach eine Rohtonsuspension mit z.B. 20 % Feststoffgehalt mit einer säurebehandelten Suspension von nur 17 % Feststoffgehalt verglichen werden. Die bei den beschriebenen Verhältnissen auftretende Viskositätsabnahme beträgt also (Werte graphisch ermittelt bei $D = 570 \text{ sec}^{-1}$) unter Berücksichtigung der Viskosität von reinem Wasser bei $20^\circ$ C von 0,4 mPa.s:

bei Rohtonsuspension mit 30 % Feststoffgehalt: 76 %
"         "              "    20 %    "        : 63 %

Es wurden ferner Suspensionen des säurebehandelten Tons mit einem Feststoffgehalt von etwa 20 Gew.-% (pH-Wert etwa 3,7) durch Zusatz von Alkali bzw. Säure auf bestimmte pH-Werte eingestellt, und die Viskositäten dieser Suspensionen wurden in der vorstehend angegebenen Weise bei einem Schergefälle $D=570 \text{ sec}^{-1}$ bestimmt. Es wurden die nachstehenden Ergebnisse erhalten:

| Probe Nr.: | pH-Wert | Viskosität mPa.s |
|---|---|---|
| 1 | 10,0 | 13,0 |
| 2 | 6,9 | 4,3 |
| 3 | 3,7 | 4,3 |
| 4 | 1.8 | 6.3 |

Hieraus ergibt sich, daß der günstigste pH-Wert im schwach sauren Bereich liegt.

## Beispiel 2

Der wie nach Beispiel 1 vorbehandelte Rohton wird als heiße saure Suspension, wie sie nach der Säurebehandlung anfällt, mit 2,0 atü in eine säurefeste Hydrozyklonstufe geleitet und von den Grobanteilen über 35 $\mu$ weitgehend befreit.

Im Vergleich zum säurebehandelten Ausgangsmaterial hatte das nach der Hydrozyklonbehandlung und nachfolgender Filtration und Waschung erhaltene Feingut eine wesentlich verbesserte Adsorptionskraft, wie nachfolgende Tabelle zeigt:

|  |  | Säurebehandeltes Ausgangsmaterial | Zyklonfeingut |
|---|---|---|---|
| Feststoffgehalt | g/Liter | 214 | 196 |
| Ausbeute | % | 100 | 88,4 |
| Bleichwirkung bei Leinöl* |  |  |  |
| Lovibondwerte 10xRot+Gelb |  | 89 | 72 |
| Rückstand > 33 $\mu$ | % | 14,0 | 6,9 |

* Die Bleichwirkung wurde durch Behandlung von Leinöl mit 2 % Bleicherde über einen Zeitraum von 30 Minuten bei 95°C in einer 5 1/4"-Küvette gemessen. Die Lovibondzahl (10xRot+Gelb) des ungebleichten Leinöls betrug 181.

Die Ergebnisse zeigen die Erhöhung der Bleichwirkung des Feingutanteiles.

R. SPLANEMANN        DR. B. REITZNER        ... ...        F. WERDERMANN
DIPL.-ING.                DIPL.-CHEM.                                                        DIPL.-ING.

MÜNCHEN                                                                          HAMBURG

8000 MÜNCHEN 2    9. Juni 1978
Tal 13
Telefon (089) 22 62 07 / 22 62 09
Telegramme: Inventius München

Unsere Akte: 4465-X-10.310

Ihr Zeichen: Europ.Patent-
anmeldung

Süd-Chemie AG

Patentansprüche:

1. Verfahren zum Reinigen von Tonsuspensionen zwecks Gewinnung der Feinanteile, dadurch gekennzeichnet, daß man den Rohton einer Säurebehandlung unterwirft und die Suspension des säurebehandelten Materials in einem Hydrozyklon von den Grobanteilen befreit.

2. Verfahren nach Anspruch 1, dadurch gekennzeichnet, daß man von einer Suspension eines Tons der Montmorillonit-Beidellit-Reihe, vorzugsweise von Bentonit, ausgeht.

3. Verfahren nach Anspruch 1 oder 2, dadurch gekennzeichnet, daß man die Säurebehandlung mit einer Mineralsäure, vorzugsweise mit Salzsäure oder Schwefelsäure bei erhöhter Temperatur, vorzugs-weise drucklos bei etwa 90 bis 100°C oder unter Druck bei etwa 100 bis 300°C durchführt.

BAD ORIGINAL

4. Verfahren nach einem der Ansprüche 1 bis 3, dadurch gekennzeichnet, daß man die Säurebehandlung so lange durchführt, bis die spezifische Oberfläche (BET) mindestens etwa 150 g/m$^2$ und das Mikroporenvolumen kleiner 800 Å mindestens 0,13 ml/g und kleiner 140 Å mindestens 0,10 ml/g beträgt.

5. Verfahren nach einem der Ansprüche 1 bis 4, dadurch gekennzeichnet, daß man den säurebehandelten Ton vor der Behandlung im Hydrozyklon von überschüssiger Säure und löslichen Salzen befreit.

6. Verfahren nach einem der Ansprüche 1 bis 5, dadurch gekennzeichnet, daß man im Hydrozyklon eine Suspension mit einem Feststoffanteil von etwa 150 bis 250 g/Liter, vorzugsweise von etwa 180 bis 200 g/Liter, einsetzt.

7. Verfahren nach einem der Ansprüche 1 bis 6, dadurch gekennzeichnet, daß man die säurebehandelte Bentonitsuspension über mindestens zwei hintereinander geschaltete Zyklonstufen pumpt.

8. Verfahren nach einem der Ansprüche 1 bis 7, dadurch gekennzeichnet, daß man das von den Grobanteilen befreite säurebehandelte Material wieder mit Alkali- oder Erdalkali-Ionen belädt.

9. Verwendung der nach einem der Ansprüche 1 bis 8 erhaltenen Produkte als Adsorptions- und Bleichmittel, Füllstoffe, Papierbeschichtungsmittel, Farbentwickler, Katalysatoren und Träger für Katalysatoren, Ionenaustauscher und Komplexbildner.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 865 539</u> (A.FOLLIET et al.) <br> * Seite 1, Zeile 47 bis Seite 2, Zeile 10 * | 1,3 |
| | <u>FR - A - 1 592 438</u> (MIZUSAWA K.K.K.K. <br> * Seite 12, Zeile 7 bis 36; Seite 22, Zusammenfassung II * | 1-4,9 |
| | <u>US - A - 2 147 774</u> (S.C.LYONS) <br> * Seite 1, Spalte 1, Zeile 53 bis Spalte 2, Zeile 13; Seite 1, Spalte 2, Zeile 26 bis 31; Seite 2, Spalte 1, Zeile 27 bis 40; Figuren * | 1,5,9 |
| | <u>DE - A - 2 213 130</u> (MOORE BUSINESS <u>FOMMS</u>) <br> * Seiten 15-20 * | 1,9 |
| | <u>DE - A - 2 338 937</u> (DYNAMIT NOBEL) <br> * Seite 9; Patentanspruch 1 * | 1 |
| A | <u>FR - A - 598 985</u> (A.RENAUDIN) | |
| A | <u>US - A - 2 449 891</u> (W.W.GARY et al.) | |

**KLASSIFIKATION DER ANMELDUNG (Int.Cl.⁴)**

C 04 B 33/04
C 09 C 1/42
C 01 B 33/26
B 28 C 1/08
B 03 B 5/34
B 01 J 21/16
B 41 M 5/22
C 01 B 33/30

**RECHERCHIERTE SACHGEBIETE (Int. Cl.²)**

C 04 B 33/00
C 09 C 1/00
B 28 C 1/00
B 01 J 21/00
B 41 M 5/00
B 03 B 1/00
B 01 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| | | |